# EUROPÄISCHE PATENTANMELDUNG

(11) **EP 3 919 989 A1**
(43) Veröffentlichungstag der Anmeldung: **08.12.2021**
(21) Anmeldenummer: 21171850.7
(22) Anmeldetag: 03.05.2021
(51) Int. Cl.: G05B 9/02, G05B 23/02

(54) **SICHERHEITSGERÄT MIT SPANNUNGSÜBERWACHUNG**

(30) Priorität: 02.06.2020 DE 202020103148 U
(71) Anmelder: Leuze electronic GmbH + Co. KG, 73277 Owen/Teck (DE)
(72) Erfinder: Heckmayr, Alexander, 86807 Buchloe (DE); Olbrich, Sebastian, 80992 München (DE); Hartl, Paul, 80797 München (DE)
(74) Vertreter: Ruckh, Rainer Gerhard

(57) **Zusammenfassung**

Die Erfindung betrifft ein Sicherheitsgerät (1) mit einer Anordnung von Signalausgängen (4), über welche Ausgangssignale ausgebbar sind. Den Signalausgängen (4) ist eine Spannungsversorgung zugeordnet. Wenigstens eine Überwachungsschaltung (5) mit einem Voltage Supervisor Baustein (6) ist vorgesehen, mittels derer eine Überspannungs-Überwachung oder eine Unterspannungs-Überwachung durchführbar ist. Bei Feststellen einer Überspannung oder Unterspannung in der Überwachungsschaltung (5) werden mittels eines Abschaltpfads die Signalausgänge (4) von der Spannungsversorgung abgetrennt.

## Beschreibung

Die Erfindung betrifft ein Sicherheitsgerät.

Derartige Sicherheitsgeräte können beispielsweise in Form von Sicherheitssensoren oder Sicherheitssteuerungen ausgebildet sein. Generell generieren diese Sicherheitsgeräte sicherheitsrelevante Ausgangssignale, die über Signalausgänge, die insbesondere als fehlersichere Sicherheitsschaltausgänge ausgebildet sind, ausgegeben werden.

Typischerweise wird mit den Ausgangssignalen des Sicherheitsgeräts eine externe Einheit gesteuert. Diese kann von einer Anlage gebildet sein, von der Gefahren für Personen ausgehen können.

Die vom Sicherheitsgerät ausgegebenen Ausgangssignale sind vorzugsweise in Form von binären Schaltsignalen gebildet. Mit dem Sicherheitsgerät wird allgemein eine Überwachungsfunktion derart realisiert, dass ein Schaltsignal mit einem Schaltzustand, der zur Freigabe des Betriebs der Anlage führt, nur dann angegeben wird, wenn dadurch keine Gefahr für Personen besteht. Andernfalls generiert das Sicherheitsgerät ein Schaltsignal mit einem Schaltzustand, der die Anlage in einen sicheren Zustand überführt, was insbesondere durch ein Stillsetzen der Anlage erzielt wird.

Um Gefahrensituationen zu vermeiden, ist es erforderlich, dass das Sicherheitsgerät selbst fehlerfrei arbeitet. Hierzu ist eine Funktionsprüfung des Sicherheitsgeräts erforderlich.

Bei derartigen Sicherheitsgeräten ist bekannt, zur Funktionsprüfung redundante, insbesondere zweikanalige Rechnerstrukturen einzusetzen. Damit lässt sich bereits eine Vielzahl von Funktionen des Sicherheitsgeräts überprüfen.

Jedoch ist diese Funktionsprüfung unvollständig. Insbesondere können bei Auftreten von Überspannungen oder Unterspannungen Fehlfunktionen des Sicherheitsgeräts auftreten.

Die Erfindung liegt die Aufgabe zugrunde für ein Sicherheitsgerät der eingangs genannten Art eine zuverlässige, einfach realisierbare Überprüfung des Auftretens von Über- und Unterspannungen zu ermöglichen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein Sicherheitsgerät mit einer Anordnung von Signalausgängen, über welche Ausgangssignale ausgebbar sind. Den Signalausgängen ist eine Spannungsversorgung zugeordnet. Wenigstens eine Überwachungsschaltung mit einem Voltage Supervisor Baustein ist vorgesehen, mittels derer eine Überspannungs-Überwachung oder eine Unterspannungs-Überwachung durchführbar ist. Bei Feststellen einer Überspannung oder Unterspannung in der Überwachungsschaltung werden mittels eines Abschaltpfads die Signalausgänge von der Spannungsversorgung abgetrennt.

Mit der erfindungsgemäßen Spannungsüberwachung wird ein wesentlicher Beitrag für eine komplette Funktionsprüfung des Sicherheitsgeräts und damit dessen Fehlersicherheit geleistet, was eine wesentliche Voraussetzung für den Einsatz des Sicherheitsgeräts im Bereich der Sicherheitstechnik ist.

Ein wesentlicher Vorteil der Erfindung besteht darin, dass die Spannungsüberwachung mit einem geringen Schaltungsaufwand realisiert werden kann. Dieser Vorteil ergibt sich durch den Einsatz des Voltage Supervisor Bausteins als zentrales Überwachungselement der Überwachungsschaltung.

Vorteilhaft weist der Voltage Supervisor Baustein der oder jeder Überwachungsschaltung eine integrierte Referenz und Hysterese auf.

Die Referenz definiert eine Vergleichsspannung und damit eine Sollwertvorgabe für die zu überwachende Spannung. Durch die Hysterese wird ein sicheres Schaltverhalten erzielt, das unempfindlich gegen Spannungsschwankungen ist.

Im Gegensatz zu herkömmlichen Komparatoren sind keine externen Beschaltungen zur Realisierung dieser Funktionen erforderlich. Da diese Funktionen im Voltage Supervisor Baustein integriert sind ergibt sich ein einfacher Aufbau der Überwachungsschaltung.

Gemäß einer vorteilhaften Ausführungsform wird mittels der Ausgangssignale der Signalausgänge eine externe Einheit gesteuert.

Die externe Einheit kann von einer Anlage gebildet sein, von welcher Gefahren für Personen ausgehen können. Der Begriff Anlage umfasst dabei auch Maschinen, Fahrzeuge, Roboter und dergleichen.

Das Sicherheitsgerät generiert Ausgangssignale, insbesondere binäre Schaltsignale, die über die vorzugsweise als fehlersichere Sicherheitsschaltausgänge ausgebildeten Signalausgänge ausgegeben werden, um die externe Einheit zu steuern. Dabei erfolgt die Steuerung derart, dass der Betrieb der Anlage nur dann freigegeben wird, wenn durch Überwachungsmaßnahmen, die im Sicherheitsgerät selbst oder in zugeordneten Einheiten, insbesondere Sensoreinheiten, durchgeführt werden, gewährleistet ist, dass keine Gefahren für Personen entstehen können. Andernfalls generiert das Sicherheitsgerät Ausgangssignale, mittels derer die externe Einheit in einen sicheren Zustand überführt wird, was insbesondere durch ein Stillsetzen, das heißt Abschalten der externen Einheit realisiert wird.

Gemäß einer vorteilhaften Ausführungsform werden bei Abtrennung von der Spannungsversorgung über die Signalausgänge Ausgangssignale ausgegeben, mittels derer die externe Einheit in einen sicheren Zustand überführt ist.

Damit werden unkontrollierte Gefahrenzustände vermieden, da bei Aufdecken eines Fehlers im Sicherheitsgerät in Form einer Überspannung oder Unterspannung die externe Einheit in den sicheren Zustand überführt wird.

Mit der erfindungsgemäßen Überwachungsschaltung wird generell eine interne Spannung überwacht, die insbesondere zur Bereitstellung von sicherheitsrelevanten Funktionen des Sicherheitsgeräts wesentlich ist.

Generell kann es erforderlich sein mehrere interne Spannungen des Sicherheitsgeräts zu prüfen. In diesem Fall ist das Sicherheitsgerät dahingehend erweitert, dass mehrere Überwachungsschaltungen mit jeweils einem Voltage Supervisor Baustein vorgesehen sind, wobei mit den Überwachungsschaltungen unterschiedliche Überspannungs- oder Unterspannungs-Überwachungen durchgeführt werden. Die Ausgänge aller Überwachungsschaltungen sind auf den Abschaltpfad geführt.

Wesentlich hierbei ist, dass alle Überwachungsschaltungen auf denselben Abschaltpfad geführt sind. Damit braucht nicht für jede Überwachungsschaltung ein separater Abschaltpfad vorgesehen werden, wodurch sich der Schaltungsaufwand erheblich reduziert.

Besonders vorteilhaft ist die oder jede Überwachungsschaltung von einer Steuereinheit gesteuert.

Insbesondere wird mit der Steuereinheit das Timing der durchzuführenden Spannungsüberwachungen vorgegeben. Dies ist insbesondere dann von Bedeutung, wenn das Sicherheitsgerät mehrere Überwachungsschaltungen aufweist. Dann steuert die Steuereinheit die einzelnen Überwachungsschaltungen zeitversetzt an, sodass die einzelnen Spannungsüberwachungen in den Überwachungsschaltungen einzeln hintereinander ausgeführt werden.

Gemäß einer vorteilhaften Ausführungsform sind die Testmittel ausgebildet, die mit dem Voltage Supervisor Baustein zu überwachende Spannung kurzzeitig zu ändern, und die Funktion des Voltage Supervisor Bausteins durch Rücklesen der Ausgangssignale in die Steuereinheit getestet wird.

Dabei ist vorteilhaft die Steuereinheit Bestandteil der Testmittel.

Durch die Testmittel kann die oder jede Überwachungsschaltung, die selbst eine Funktionsprüfung durchführt, auf eventuell vorhandene Fehlfunktionen getestet werden, wodurch eine noch höhere Fehlersicherheit des Sicherheitsgeräts realisiert wird.

Zweckmäßig wird dann, wenn mit den Testmitteln ein Fehler einer Überwachungsschaltung aufgedeckt wird, durch entsprechendes Generieren von Ausgangssignalen, die über die Signalausgänge ausgegeben werden, die externe Einheit in einen sicheren Zustand überführt.

Vorteilhaft sind mehrere Überwachungsschaltungen mit jeweils einem Voltage Supervisor Baustein vorgesehen. Mit den Überwachungsschaltungen werden unterschiedliche Überspannungs- oder Unterspannungs-Überwachungen durchgeführt. Die Ausgänge aller Überwachungsschaltungen sind auf den Abschaltpfad geführt. Durch die kurzzeitige Änderung der zu überwachenden Spannung werden die Ausgangssignale der Signalausgänge so kurzzeitig geändert, dass deren Änderungen in der externen Einheit nicht registriert werden.

Die mit den Testmitteln durchgeführten Funktionsprüfungen erfolgen somit derart, dass die Grundfunktion des Sicherheitsgeräts, nämlich die Ansteuerung der externen Einheit, hiervon völlig unbeeinträchtigt bleibt.

Gemäß einer konstruktiv vorteilhaften Ausgestaltung ist dem Voltage Supervisor Baustein einer Überwachungsschaltung ein Spannungsteiler zugeordnet, mittels dessen die mit dem Voltage Supervisor Baustein zu überwachende Spannung veränderbar ist.

Dabei ist durch Reduzieren der Spannung mittels des Spannungsteilers überprüfbar, ob der Voltage Supervisor Baustein bei zu niedriger Spannung anspricht. Durch Erhöhen der Spannung mittels des Spannungsteilers ist überprüfbar, ob der Voltage Supervisor Baustein bei zu hoher Spannung anspricht.

Mit dem Spannungsteiler kann mit geringen Schaltungsaufwand die zu überwachende Spannung schnell und präzise geändert werden um die Funktionsprüfungen durchzuführen.

Gemäß einer vorteilhaften Ausführungsform ist das erfindungsgemäße Sicherheitsgerät als Sicherheitssensor ausgebildet, der vorzugsweise aber nicht zwingend als optischer Sensor ausgebildet ist.

Beispielsweise ist der optische Sensor ein Flächendistanzsensor, ein Lichtvorhang, ein Kamerasensor, ein Lichttaster oder eine Lichtschranke.

Der Begriff Lichtschranke umfasst auch Reflexionslichtschranken, wobei auch ein Lichtvorhang sowohl nach dem Prinzip einer Einweglichtschranke als auch nach dem Prinzip einer Reflexionslichtschranke arbeiten kann. Bei einem Flächendistanzsensor handelt es sich generell um einen scannenden Distanzsensor. Dabei weist der Flächendistanzsensor vorteilhaft ein nach einem Impuls-Laufzeit-Verfahren arbeitenden Distanzsensor mit einem Lichtimpuls aussendenden Sender und einem Lichtimpulse empfangenden Empfänger auf, wobei die Lichtstrahlen des Senders periodisch innerhalb eines flächigen oder räumlichen Überwachungsbereichs geführt sind.

Gemäß einer alternativen Ausführungsform ist das Sicherheitsgerät ein Sicherheitsschaltgerät oder eine Sicherheitssteuerung ist.

Die Erfindung wird im Folgenden anhand der Zeichnungen erläutert. Es zeigen:
- Figur 1:: Anordnung des erfindungsgemäßen Sicherheitsgeräts mit einer zugeordneten externen Einheit.
- Figur 2:: Erste Ausführungsform des Sicherheitsgeräts gemäß Figur 1 mit einer Überwachungsschaltung.
- Figur 3a, b:: Schaltdiagramme eines Voltage Supervisor Bausteins für das Sicherheitsgerät gemäß Figur 1.
- Figur 4:: Zweite Ausführungsform des Sicherheitsgeräts gemäß Figur 1 mit mehreren Überwachungsschaltungen.

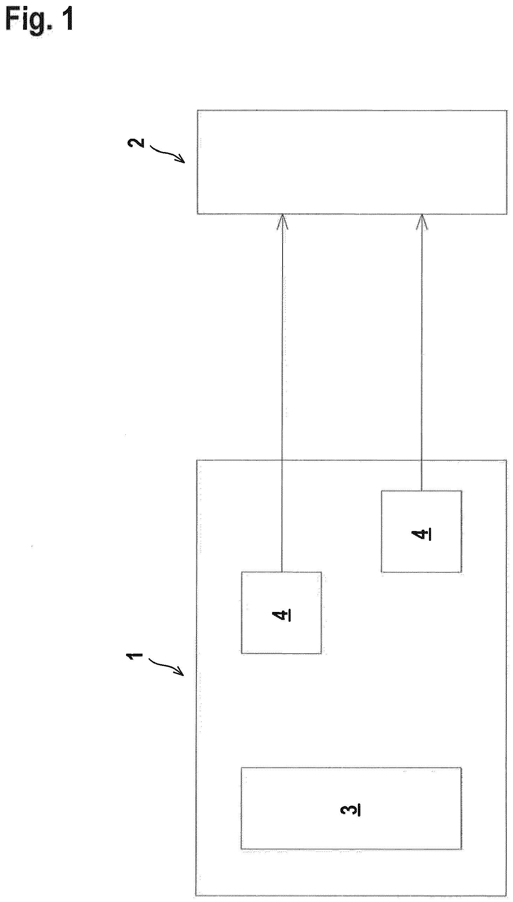

Figur 1 zeigt eine Anordnung des erfindungsgemäßen Sicherheitsgeräts 1 mit einer zugeordneten externen Einheit 2.

Die externe Einheit 2 ist von einer Anlage gebildet, wobei innerhalb eines Gefahrenbereichs an der Anlage Gefahren für Personen entstehen können.

Das Sicherheitsgerät 1 ist im vorliegenden Fall als Sicherheitssensor in Form eines Lichtvorhangs ausgebildet, mit dem dieser Gefahrenbereich abgesichert wird. Der Lichtvorhang weist hierzu in bekannter Weise mehrere Strahlachsen bildende Paare von Lichtstrahlen emittierenden Sendern und Lichtstrahlen empfangenden Empfängern auf. Mit diesen wird ein flächiges Schutzfeld überwacht, wodurch der Zugang zum Gefahrenbereich abgesichert wird.

Die Auswertung der Empfangssignale der Empfänger erfolgt in einer Steuereinheit 3, die einen redundanten Aufbau aufweisen kann. Abhängig von den Empfangssignalen der Empfänger wird in der Steuereinheit 3 ein Ausgangssignal generiert, das im vorliegenden Fall als binäres Schaltsignal ausgebildet ist.

Die Schaltzustände des Schaltsignals geben an, ob sich ein Objekt im Schutzfeld befindet oder nicht. Die Schaltsignale werden über zwei Signalausgänge 4 an die externe Einheit 2 ausgegeben, wobei die Signalausgänge 4 im vorliegenden Fall als fehlersichere Sicherheitsschaltausgänge ausgeführt sind.

Wird mit dem Lichtvorhang kein Objekt im Schutzfeld registriert, entspricht dies einem nicht gefährlichen Zustand, sodass mit dem entsprechenden Schaltsignal der Betrieb der externen Einheit 2 freigegeben wird.

Wird mit dem Lichtvorhang ein Objekt im Schutzfeld registriert, entspricht dies einem Gefahrenzustand, sodass mit dem entsprechenden Schaltsignal die externe Einheit 2 in einen sicheren Zustand überführt wird, wobei hierzu insbesondere die externe Einheit 2 stillgesetzt, das heißt abgeschaltet wird.

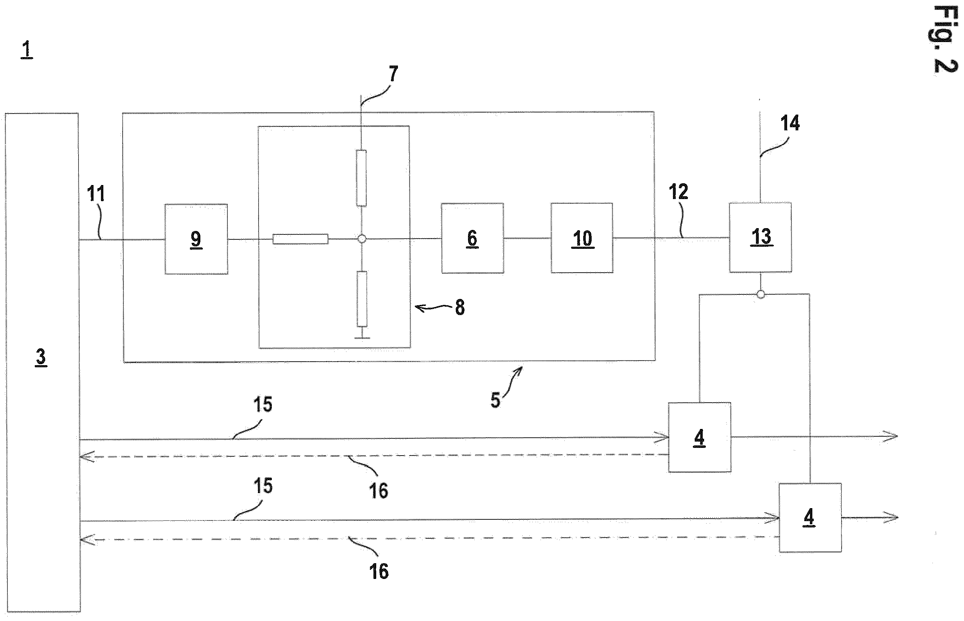

Figur 2 zeigt ein erstes Beispiel eines Sicherheitsgeräts 1, welches eine Überwachungsschaltung 5 zur Spannungsüberwachung einer internen Spannung aufweist. Die Überwachungsschaltung 5 weist als zentrales Überwachungselement einen Voltage Supervisor Baustein 6 auf. Dem Voltage Supervisor Baustein 6 wird die zu überwachende Spannung über eine Leitung 7 und einen Spannungsteiler 8 zugeführt. Eingangsseitig weist die Überwachungsschaltung 5 eine erste Pegelanpassung 9 beziehungsweise Entkopplungsschaltung auf. Ausgangsseitig ist eine entsprechende Pegelanpassung 10 vorgesehen.

Die Überwachungsschaltung 5 wird über eine Steuerleitung 11 von der Steuereinheit 3 angesteuert. Das Signal am Ausgang der Überwachungsschaltung 5 wird über eine Leitung 12 einer Abtrenneinheit 13 zugeführt, die einen Abschaltpfad für die Signalausgänge 4 bildet. Die Abtrenneinheit 13 ist über eine Leitung 14 an eine Spannungsversorgung angeschlossen.

Die Steuereinheit 3 steuert weiterhin über Ansteuerleitungen 15 die Signalausgänge 4 an, wobei die Signalzustände der Signalausgänge 4 über Rückleseleitungen 16 in die Steuereinheit 3 rückgelesen werden.

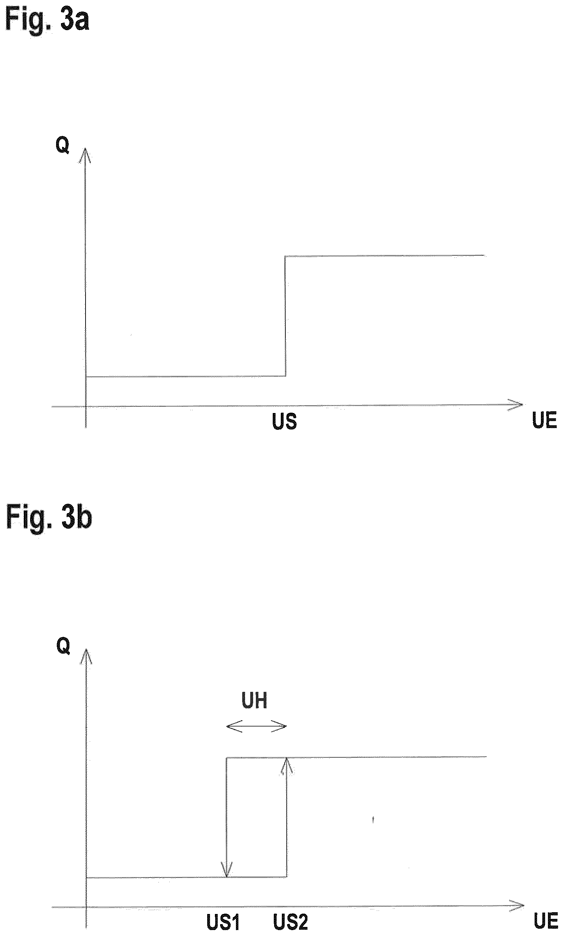

Die Figuren 3a, 3b zeigen das Schaltverhalten von Voltage Supervisor Baustein 6, die in der Überwachungsschaltung 5 des Sicherheitsgeräts 1 eingesetzt werden.

In den Diagrammen der Figuren 3a, 3b ist der Schaltzustand des Ausgangs Q des Voltage Supervisor Bausteins 6 in Abhängigkeit des Eingangssignals UE aufgetragen.

Bei der Ausführungsform gemäß Figur 3a ist als Referenz nur ein Schwellwert US vorgesehen, bei welchem der Ausgang Q seinen Schaltzustand wechselt.

Bei der Ausführungsform gemäß Figur 3b sind als Referenz zwei Schwellwerte US1, US2 vorgesehen, die eine Hysterese UH = US2 - US1 definieren. Bei Erhöhen des Eingangssignals UE bildet US2 die Schwelle, bei der sich der Schaltzustand des Ausgangs Q ändert. Bei Reduzieren des Eingangssignals bildet US1 die Schwelle, bei der sich der Schaltzustand des Ausgangs Q ändert. Vorteilhaft wird diese Ausführungsform des Voltage Supervisor Bausteins 6 bei dem Sicherheitsgerät 1 gemäß Figur 1 (und auch Figur 2) eingesetzt.

Die Funktionsweise des Sicherheitsgeräts 1 gemäß Figur 2 ist derart, dass in der Überwachungsschaltung 5 mittels des Voltage Supervisor Bausteins 6 die über die Leitung 7 und den Spannungsteiler 8 zugeführte interne Spannung auf Vorliegen einer Überspannung oder Unterspannung geprüft wird. Liegt eine Überspannung oder Unterspannung vor, ändert der Ausgang Q des Voltage Supervisor Bausteins 6 seinen Schaltzustand, was über die Leitung 12 auf die Abtrenneinheit 13 ausgegeben wird. Dadurch trennt die Abtrenneinheit 13 die Signalausgänge 4 von der Spannungsversorgung, wodurch die Signalausgänge 4 einen sicheren Zustand der externen Einheit 2 durch entsprechende Ausgangssignale bewirken. Vorzugsweise geben dann die Signalausgänge 4 Ausgangssignale aus, mit denen die externe Einheit 2 stillgesetzt wird.

Zur Funktionsprüfung der Überwachungsschaltung 5, insbesondere des Voltage Supervisor Bausteins 6 wird über den Spannungsteiler 8 die am Voltage Supervisor Baustein 6 anliegende interne Spannung geändert. Dann werden Ansteuersignale von der Steuereinheit 3 über die Ansteuerleitung 15 an die Signalausgänge 4 ausgelesen und die Ankunftssignale als Reaktion auf die Ansteuersignale über die Rückleseleitung 16 in die Steuereinheit 3 rückgelesen, wodurch festgestellt wird ob in dem Voltage Supervisor Baustein 6 ein Fehler vorliegt oder nicht.

Je nachdem ob für den Voltage Supervisor Baustein 6 ein Überspannungs- oder Unterspannungstest durchgeführt wird, ist durch Reduzieren der Spannung mittels des Spannungsteilers 8 überprüft, ob der Voltage Supervisor Baustein 6 bei zu niedriger Spannung anspricht, und durch Erhöhen der Spannung mittels des Spannungsteilers 8 ist überprüfbar, ob der Voltage Supervisor Baustein 6 bei zu hoher Spannung anspricht.

Die Funktionsprüfung der Überwachungsschaltung 5 erfolgt zweckmäßig derart, dass durch die kurzzeitige Änderung der zu überwachenden Spannung die Ausgangssignale der Signalausgänge 4 so kurzzeitig geändert werden, dass deren Änderungen in der externen Einheit 2 nicht registriert werden.

Damit wird der Betrieb der externen Einheit 2 durch die vorzugsweise fortlaufend erfolgende Funktionsprüfung der Überwachungsschaltung 5 nicht beeinträchtigt.

Bei Aufdecken eines Fehlers im Voltage Supervisor Baustein 6 werden über die Steuereinheit 3 vorteilhaft Ausgangssignale der Signalausgänge 4 generiert, mittels derer die externe Einheit 2 in einem sicheren Zustand überführt wird.

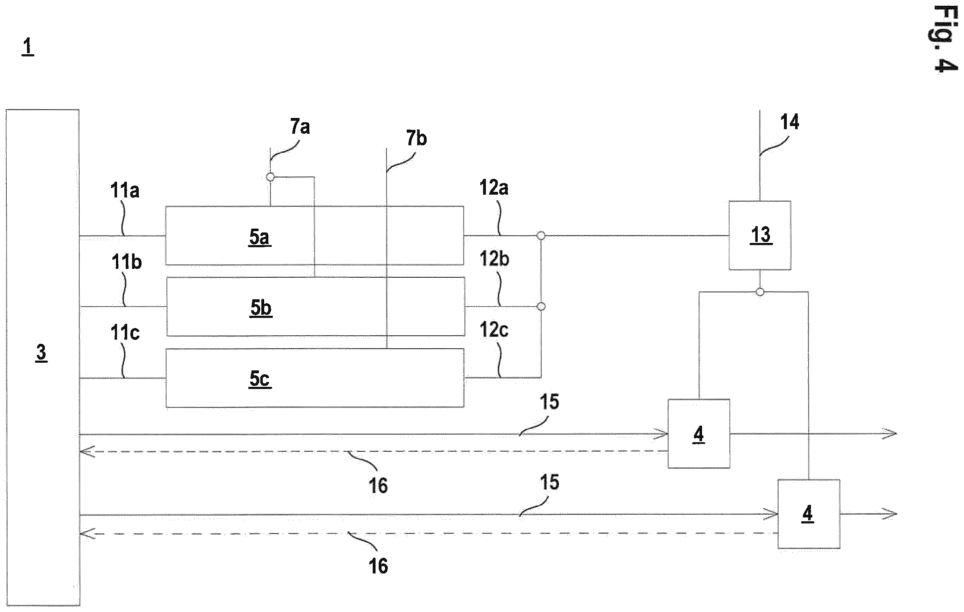

Figur 4 zeigt eine Erweiterung der Ausführungsform gemäß Figur 2 derart, dass nicht nur eine Überwachungsschaltung 5 vorgesehen ist, sondern eine Mehrfachanordnung mit drei Überwachungsschaltungen 5a, 5b, 5c. Natürlich kann auch eine andere Anzahl von Überwachungsschaltungen 5, 5a, 5b, 5c vorgesehen sein.

Über Leitungen 7a, 7b werden den Überwachungsschaltungen 5a -5c die zu prüfenden internen Spannungen zugeführt. Die über die Leitung 7a zugeführte interne Spannung wird in der Überwachungsschaltung 5a auf Unterspannungen und in der Überwachungsschaltung 5b auf Überspannungen geprüft. Die über die Leitung 7b zugeführte weitere interne Spannung wird in der Überwachungsschaltung 5c auf Unter- oder Überspannungen geprüft.

Die Überwachungsschaltungen 5a - 5c des Sicherheitsgeräts 1 gemäß Figur 4 entsprechen hinsichtlich Aufbau und Funktionsweise der Überwachungsschaltung 5 gemäß Figur 2.

Jede Überwachungsschaltung 5a, 5b, 5c wird über eine separate Steuerleitung 11a, 11b, 11c von der Steuereinheit 3 angesteuert. Die Signale an den Ausgängen der Überwachungsschaltungen 5a, 5b, 5c werden über Leitungen 12a, 12b, 12c demselben Abschaltpfad, das heißt der Abtrenneinheit 13 zugeführt.

Vorzugsweise erfolgen die Funktionsprüfungen in den Überwachungsschaltungen 5a - 5c zeitlich versetzt, sodass die Überwachungsschaltungen 5a - 5c zeitlich nacheinander die Abtrenneinheit 13 ansteuern.

Wird wenigstens in einer der Überwachungsschaltungen 5a - 5c eine Fehlfunktion aufgedeckt, werden die Signalausgänge 4 von der Spannungsversorgung getrennt. Dadurch werden Ausgangssignale der Signalausgänge 4 generiert mittels derer die externe Einheit 2 in einen sicheren Zustand überführt ist.

Die Funktionsprüfungen der Überwachungsschaltungen 5a - 5c erfolgen analog zur Ausführungsform gemäß Figur 2.

### B ezugszei chenli ste

- (1): Sicherheitsgerät
- (2): externe Einheit
- (3): Steuereinheit
- (4): Signalausgang
- (5): Überwachungsschaltung
- (5a - c): Überwachungsschaltung
- (6): Voltage Supervisor Baustein
- (7): Leitung
- (7a - b): Leitung
- (8): Spannungsteiler
- (9): Pegelanpassung
- (10): Pegelanpassung
- (11): Steuerleitung
- (11a - c): Steuerleitung
- (12): Leitung
- (12a - c): Leitung
- (13): Abtrenneinheit
- (14): Leitung
- (15): Ansteuerleitung
- (16): Rückleseleitung
- Q: Ausgang, Schaltzustand
- UE: Eingangssignal
- US: Schwellwert
- US1: Schwellwert
- US2: Schwellwert
- UH: Hysterese

## Patentansprüche

1. Sicherheitsgerät (1) mit einer Anordnung von Signalausgängen (4), über welche Ausgangssignale ausgebbar sind, wobei den Signalausgängen (4) eine Spannungsversorgung zugeordnet ist, **dadurch gekennzeichnet, dass** wenigstens eine Überwachungsschaltung (5) mit einem Voltage Supervisor Baustein (6) vorgesehen ist, mittels derer eine Überspannungs-Überwachung oder eine Unterspannungs-Überwachung durchführbar ist, und dass bei Feststellen einer Überspannung oder Unterspannung in der Überwachungsschaltung (5) mittels eines Abschaltpfads die Signalausgänge (4) von der Spannungsversorgung abgetrennt sind.

2. Sicherheitsgerät (1) nach Anspruch 1, **dadurch gekennzeichnet, dass** mittels der Ausgangssignale der Signalausgänge (4) eine externe Einheit (2) gesteuert wird.

3. Sicherheitsgerät (1) nach Anspruch 2, **dadurch gekennzeichnet, dass** bei Abtrennung von der Spannungsversorgung über die Signalausgänge (4) Ausgangssignale ausgegeben werden, mittels derer die externe Einheit (2) in einen sicheren Zustand überführt ist.

4. Sicherheitsgerät (1) nach einem der Ansprüche 1 bis 3, **dadurch gekennzeichnet, dass** die Signalausgänge (4) als Sicherheitsschaltausgänge ausgebildet sind.

5. Sicherheitsgerät (1) nach einem der Ansprüche 1 bis 4, **dadurch gekennzeichnet, dass** mehrere Überwachungsschaltungen (5a, 5b, 5c) mit jeweils einem Voltage Supervisor Baustein (6) vorgesehen sind, wobei mit den Überwachungsschaltungen (5a, 5b, 5c) unterschiedliche Überspannungs- oder Unterspannungs-Überwachungen durchgeführt werden, und dass die Ausgänge aller Überwachungsschaltungen (5a, 5b, 5c) auf den Abschaltpfad geführt sind.

6. Sicherheitsgerät (1) nach einem der Ansprüche 1 bis 5, **dadurch gekennzeichnet, dass** die oder jede Überwachungsschaltung (5, 5a, 5b, 5c) von einer Steuereinheit (3) gesteuert ist.

7. Sicherheitsgerät (1) nach einem der Ansprüche 1 bis 6, **dadurch gekennzeichnet, dass** Testmittel zur Funktionsprüfung der oder jeder Überwachungsschaltung (5, 5a, 5b, 5c) vorgesehen sind.

8. Sicherheitsgerät (1) nach Anspruch 7, **dadurch gekennzeichnet, dass** die Testmittel ausgebildet sind, die mit dem Voltage Supervisor Baustein (6) zu überwachende Spannung kurzzeitig zu ändern, und die Funktion des Voltage Supervisor Bausteins (6) durch Rücklesen der Ausgangssignale in die Steuereinheit (3) getestet wird.

9. Sicherheitsgerät (1) nach Anspruch 8, **dadurch gekennzeichnet, dass** durch die kurzzeitige Änderung der zu überwachenden Spannung die Ausgangssignale der Signalausgänge (4) so kurzzeitig geändert werden, dass deren Änderungen in der externen Einheit (2) nicht registriert werden.

10. Sicherheitsgerät (1) nach einem der Ansprüche 8 oder 9, **dadurch gekennzeichnet, dass** dem Voltage Supervisor Baustein (6) einer Überwachungsschaltung (5) ein Spannungsteiler (8) zugeordnet ist, mittels dessen die mit dem Voltage Supervisor Baustein (6) zu überwachende Spannung veränderbar ist.

11. Sicherheitsgerät (1) nach Anspruch 10, **dadurch gekennzeichnet, dass** durch Reduzieren der Spannung mittels des Spannungsteilers (8) überprüfbar ist, ob der Voltage Supervisor Baustein (6) bei zu niedriger Spannung anspricht, und dass durch Erhöhen der Spannung mittels des Spannungsteilers (8) überprüfbar ist, ob der Voltage Supervisor Baustein (6) bei zu hoher Spannung anspricht.

12. Sicherheitsgerät (1) nach einem der Ansprüche 1 bis 11, **dadurch gekennzeichnet, dass** der Voltage Supervisor Baustein (6) der oder jeder Überwachungsschaltung (5) eine integrierte Referenz und Hysterese (UH) aufweist.

13. Sicherheitsgerät (1) nach einem der Ansprüche 1 bis 12, **dadurch gekennzeichnet, dass** dieses ein Sicherheitssensor, ein Sicherheitsschaltgerät oder eine Sicherheitssteuerung ist.

14. Sicherheitsgerät (1) nach Anspruch 13, **dadurch gekennzeichnet, dass** der Sicherheitssensor ein optischer Sensor ist.

15. Sicherheitsgerät (1) nach Anspruch 14, **dadurch gekennzeichnet, dass** der optische Sensor ein Flächendistanzsensor, ein Lichtvorhang, ein Kamerasensor, ein Lichttaster oder eine Lichtschranke ist.
